# EUROPEAN PATENT APPLICATION

(11) **EP 3 835 754 A1**
(43) Date of publication of application: **16.06.2021**
(21) Application number: 19214420.2
(22) Date of filing: 09.12.2019
(51) Int. Cl.: G01N 15/06, G01N 15/02

(54) **METHOD AND DEVICE FOR DETERMINATION OF PARTICLE SURFACE AREA**

(71) Applicant: ETH Zurich, 8092 Zurich (CH)
(72) Inventor: FRIEBEL, Franz, 8050 Zürich (CH); MENSAH, Amewu, 8053 Zürich (CH)

(57) **Abstract**

A method for determining the particle surface area, wherein the raw particles are nano-particles with samplee masses between a few nanograms and a few micrograms and single particle masses below 100 nanograms in aerosolized state (R), in a particle analyzing setup (0), is disclosed, which is carried out with raw particles in aerosolized state nearly on-time. This is done by leading in the raw particle gas-flow (R) comprising the raw particles into a particle mass measurement unit (6) and exposing the raw particle gas-flow (R) to a gas flow of reactive gas (M) with a known amount of a reactive gas (M) from a reactive gas source (3) in a gaseous state in an adsorption unit (5) before further transport of the resulting adsorbed particle gas-flow (A), comprising aerosol raw particles with adsorbed reactive gas molecules (M) into the particle mass measurement unit (6), wherein masses from the raw particles and the adsorbed particles are determined in the particle mass measurement unit (6), comprising at least a mass analyzer (60), before subsequently the surface areas of the raw particles can be determined by comparison of masses of raw particles of the raw particle gas-flow (R) and masses of adsorbed particles of the adsorbed particle gas-flow (A).

## Description

### TECHNICAL FIELD

The present invention describes a method for determining the particle surface area of raw particles with particle sizes below 50 microns, in a particle analyzing setup, while the raw particles are in aerosolized state, a particle analysing setup for determining the particle surface area of raw particles with particle sizes below 50 microns in aerosolized state from a particle source, with single particle masses below 100 nanogram in aerosolized state and the use of adsorption of reactive gas molecules at raw particles with particle sizes below 50 microns, in aerosolized state in a raw particle gas-flow for determining the particle surface area of the raw particles.

### STATE OF THE ART

State of the art surface area determination of particles is the BET-method. The only standard method recommended by the International Organization for Standardization (ISO 9277) is the Brunauer, Emmet and Teller (BET) method (Brunauer et al., 1938). This technique is a volumetric method utilizing the partial pressure variance of nitrogen at liquid nitrogen temperature for surface area density determination (SADD).

Variations of the BET method exist using noble gases e.g. Krypton or Argon at cryogenic temperatures or CO₂ at room temperature. Besides the adsorptive methods, Different chemical detection methods such as chemical-ionization mass spectrometry (CIMS) or headspace gas chromatography (HS-GC) are used for SADD by organic gases or water vapor adsorption.

Despite the large variability in details of each method, all techniques require specific measurement conditions and/or sample preparation which are disadvantageous for the SADD of nanoparticles. Three of the most important critical aspects will be discussed for BET exemplarily:
a) The required sample amount and the inherently required sample collection procedure
   Sample amounts on the order of grams are required to allow for reliable BET measurements. This amount is challenging to be sampled especially in the case of atmospheric or size selected samples when mass concentrations of dispersed particles are on the order of 10° to 10² µg/m³. Therefore, either long sampling durations have to be applied and/or non-size selected samples have to be collected. The sampling process itself, the inherent time delay between sampling and sample analysis, as well as the extraction of the sample from the storage container/substrate bears the risk of significant sample modification.
b) The state of the aerosol sample
   BET surface determination can only be performed on a bulk aerosol sample generally acquired by filter sampling but not on particles dispersed in the gas phase. Therefore, the sample surface is not determined in-situ and in the original state of the particles.
c) The treatment of the aerosol sample during BET determination The risk of sample modification is further amplified by the sample treatments during the actual BET measurement. The aerosol sample is generally preconditioned by heating and/or evacuation which is especially critical for aerosol particles containing or consisting of semi-volatile components, which might evaporate due to the treatment.

In short, BET requires relatively large sample masses (>0.5g), sample preconditioning and needs at least 30 minutes time per sample, for determination of the particle surface area. Further it requires liquid nitrogen or argon as coolant and therefore a laboratory respectively infrastructure and a trained operator. This technique is in particular not applicable for aerosolized samples. The raw particles have to be collected, before preconditioning steps are carried out.

For measuring the physical surface area of particles dispersed in the gas phase, a faster and less complicated method is needed, if possible avoiding a laboratory to be carried out. Smaller sample amounts should be analyzable in less time than in the BET-process.

### DESCRIPTION OF THE INVENTION

The object of the present invention is to create a method for determining the particle surface area of aerosol particles while in aerosolized state, nearly on-time. A device for the method and use of adsorption of reactive gas molecules at raw particles in aerosolized state in a raw particle gas-flow R for accelerated determining the particle surface area are avoiding the disadvantages of the prior art.

We developed a method, directly analyzing aerosolized particles, avoiding the mentioned disadvantages of the BET-process.

The here described surface area determination, for example by ozone adsorption (SADOA) and a suitable device, which is capable of avoiding the shortcomings of the BET method.

Raw particles can be measured in aerosolized state, down to low particle number concentration (<100 particles/cm3) and at ambient temperatures, below 40°C, in particular between -20°C and 60°C. Due to the measurement principle the measurement itself is faster than the BET-Method. Further no specific laboratory infrastructure (e.g. liquid nitrogen supply) is needed to conduct the measurement. Besides power, the only consumables needed are butanol or Water for the particle counter and eventually an external gas supply e.g. pressurized gas bottle.

The method is commercially important in particular the field of aerosol research, specifically in air quality monitoring, toxicology or health exposure studies. Such a fast particle characterization can be also used as part of a production process.

### BRIEF DESCRIPTION OF THE DRAWINGS

Further understanding of various aspects of the invention can be obtained by reference to the following detailed description in conjunction with the associated drawings, which are described briefly below.

A preferred exemplary embodiment of the subject matter of the invention is described below in conjunction with the attached drawings.
- Figure 1: shows a schematic view of a particle analysing setup for determining the particle surface area of raw particles in aerosolized state, for amounts of such raw particles with sample masses of a few nanograms to a few micrograms.
- Figure 2: shows the measurement principle of the SADOA method, with pre-selection of raw particles.
- Figure 3a: shows a diagram of the evolution of the timely differences of mass and diameter of adsorbed particles.
- Figure 3b: shows a box-plot summarizing the average single particle mass increase due to ozone-adsorption for different soot particles.
- Figure 3c: shows the calculated ozone-surface coverage and measured single particle mass as a function of ozone-concentration for one soot particle.

### DESCRIPTION

A particle analysing setup 0 and a workable method of surface area determination of raw particles in aerosolized state by measurement of the mass increase due to gas uptake or gas adsorption, are presented here at example of surface area determination by ozone adsorption (SADOA).

Raw particle surface areas can be measured and estimated in aerosolized state, even at low particle number concentration <1000 particle/cm³, in particular below 100 particles/cm³ and at ambient temperatures, in particular below 40°C. The sizes of the raw particles are below 50 micron, in particular between 10nm to 1000nm. The size refers hereby to the aerodynamic 50% cut-off radius. The masses of such raw particles are below 100 nanogram, in particular between 10 attogram and 100 picogram.

Other reactive gases than ozone can be used.

The particle analysing setup 0 for determining the particle surface area of raw particles in a raw particle gas-flow R comprises a particle source 1 or particle inlet, a reactive gas source 3, an adsorption unit 5, a particle mass measurement unit 6 and an electronic control and data analysis unit 7. Solid lines indicate the tubing for the aerosol flow, which can be done in different ways, but according to order of the parts of the particle analysing setup 0 shown here. Dashed lines indicate electronic connections of devices 1, 2, 3, 4, 5, 6. with the electronic control and data analysis unit 7.

The particle source 1 or an additional optional particle size selection unit 2 delivers a raw particle gas-flow R with amounts of raw particles with sample masses (of an amount of raw particles) of a few nanograms to a few micrograms in aerosolized state. The raw particles are exposed to reactive gas molecules from the reactive gas source 3, brought together in the adsorption unit 5.

An optional reactive gas flow regulator 4 can be part of the particle analysing setup 0, for improved regulation of the amount of reactive gases exposed to the raw particle gas-flow R.

Interesting and measureable raw particle sizes are between 1 nm and 100 microns, depending of used instruments.

In general, beside different kinds of soot particles, the raw particles can be formed from
- all elements of the periodic table that are solid at 20°C,
- residues of combustion e.g. soot
- oxidic materials e.g. mineral dust
- ceramic material e.g Kaolin, tungsten carbide
- salts (NaCl, CaCl2, CuSO4, MgCO3, ...)
- biogenic particles e.g. pollen
and/ or synthetic or natural polymers.

The adsorption step of reactive gas molecules at raw particles is carried out in the adsorption unit 5, after feeding of raw particle gas-flow R and raw particle gas-flow R to at least one adsorption chamber 50.

After adsorption step or gas uptake step, a resulting adsorbed particle gas-flow A is fed in the interconnected particle mass measurement unit 6. This particle mass measurement unit 6 in particular comprises a mass analyser 60 and a particle counter 61, which are controlled by the electronic control and data analysis unit 7 for automated measurement of raw particles and adsorbed particle numbers and masses. From the results of the measurements a subsequent determination of the particle surface area of raw particles in aerosolized state is achieved by the electronic control and data analysis unit 7.

The gas flows R, A can be let out through an exhaust 8 of the particle analyzing setup 0, after the measurements or data collection.

The adsorption of reactive gas M molecules at raw particles in aerosolized state in a raw particle gas-flow R is used here, for determining the raw particle surface area. Subsequently after the adsorption step an automated analysis of values of raw particles of the raw particle gas-flow R and the adsorbed particle gas-flow A is carried out, by the mass analyzer 60 and the particle counter 61, controlled by the electronic control and data analysis unit 7 in order to calculate the surface areas of the raw particles from the measured masses and particle numbers.

If a pre-selection of raw particles is carried out with the particle size selection unit 2, before exposition of an amount of pre-selected aerosol raw particles R' in the aerosolized state to a defined amount of a reactive gas in a gaseous state, determination of raw particle surface areas is simplified.

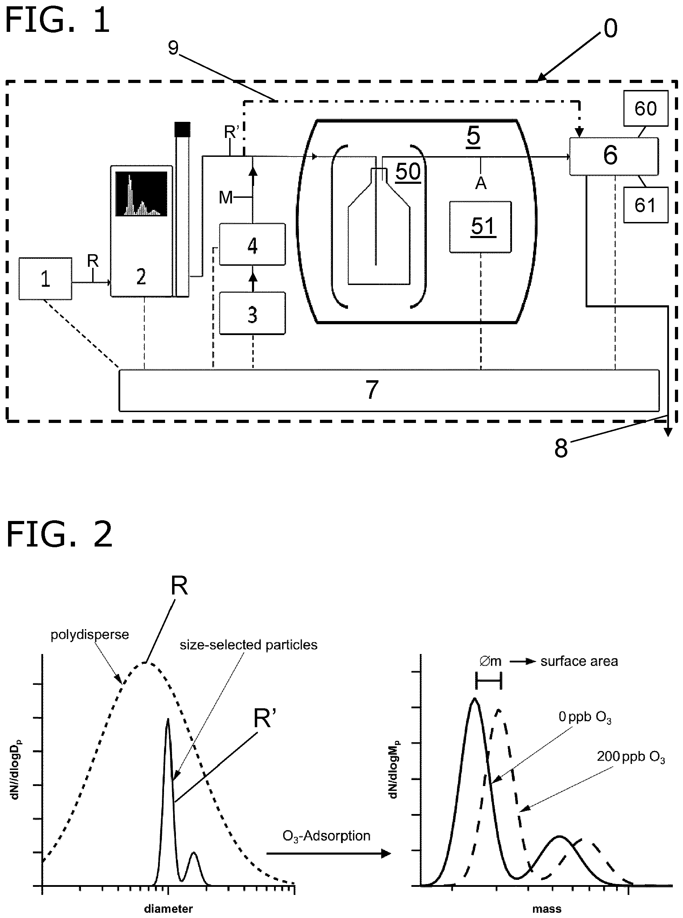

All used components should be connected with conductive tubing, for example conductive silicon or stainless steel, indicated by the solid lines in Figure 1. Non-conductive tubing is feasible as well, but not recommended.

For comparison of masses of single raw particles without reactive gas uptake or adsorption, an optional bypass 9 is placed before the reactive gas source 3 respectively the optional reactive gas flow regulator 4, as indicated by a dash-dot line. Such raw particles are measured in the later particle mass measurement unit 6 without reactive gas adsorption.

Another possibility would be mass determination of raw particles timely before or timely after reactive gas is fed to the raw particle gas-flow R.

The particle source 1 or particle inlet can be any source of a raw particle gas-flow R, comprising the raw particles.

The particle size selection unit 2 can be designed as differential mobility analyser, DMA, which is commercially available.

Instead of a DMA 2, other particle sizer 2 can be used e.g., Aerodynamic Aerosol classifier (AAC), centrifugal particle mass analyzer (CPMA), Aerosol particle mass analyzer (APM), particle impactor, virtual particle impactor. If suitable instruments are deployed to measure the particle mass downstream the adsorption unit 5, no size-selecting instrument is needed.

In general the reactive gas source 3 can be any source, a reservoir or a gas generator 3 of different possible reactive gases M, like ozone, water vapour and/or hexafluoride, in particular sulfur hexafluoride. Also equivalent possible reactive gases are: hydrocarbons with the general formula CxHy, in particular partially oxidized hydrocarbons with the general formula CxHyOz, ammonia (NH₃), hydrogen chloride (HCl) and or Carbon dioxide (CO₂).

The concentration of reactive gas respectively the pressure of the reactive gas M in the reactive gas flow is controllable respectively at least known, that with the electronic control and data analysis unit 7, a defined amount of reactive gas is to be fed in the adsorption unit 5.

The adsorption unit 5 comprises an adsorption chamber 50 or a series of for example consecutive 2 L glass bottles as a cascade of continuous-flow stirred tank reactors, a CSTR-cascade 50.

Also a small about 5 cm of plastic tubing with a few millimeter diameter can be sufficient for the adsorption process and therefore form the adsorption chamber 50 in a miniaturized version. Another embodiment of the adsorption chamber 50 could be a flow tube reactor, to form part of the particle analysing setup.

The optional monitoring devices 51 can be a reactive gas concentration monitor, humidity and/or Temperature sensors 51 placed along the tubing and/or at the inlet and outlet of the CSTR-cascade 50.

The mass analyser 60 can be chosen as Centrifugal Particle Mass Analyzer, CPMA, which is commercially available and/or the particle counter 61 can be chosen as Condensation particle counter, CPC, which is also commercially available. Mass determination can also be done by a quartz-crystal micro balance as mass analyser 60.

From the particle source a particle containing gas flow with less than 2 Ipm, due to a restriction of the DMA 2 itself, could be different with eg. the Aerodynamic aerosol klassifier, is guided through the DMA 2. The DMA 2 filters out all particles, except for particles with a defined size, that can be freely chosen.

Parallel to this flow raw particle gas-flow R a particle-free airflow of less than 2lpm, restriction of the ozone generator 3, is guided through the adjustable ozone generator 3, that increases the Ozone concentration to a defined concentration in the reactive gas M flow.

The combined gas flow that contains size-selected particles R' and ozone M is guided through the adsorption unit 5, in particular through the CSTR-cascade 50. Each individual vessel is well-mixed by the perturbation induced by the gas flow.

A set of ozone, humidity and temperature sensor 51 is installed inline between the vessels and/or inside one vessel of the CSTR-cascade 50. The positions can be freely chosen and changed. Downstream of the CSTR-cascade 50, the CPMA 60 and CPC 61 are deployed to measure the mass of the aerosol particles of the adsorbed particle gas-flow A.

The excess air flow is guided to a not depicted additional auxiliary measurement devices or is discarded through the exhaust 8.

The air flow of raw particle gas-flow R and adsorbed particle gas-flow A can be guided through the device either:
1) by applying an overpressure at the inlets (particle source 1 or 2 and reactive gas source 3 and opening the outlets to the ambient.
2) by applying an underpressure at the outlet and open the inlets to ambient
3) by applying an overpressure at the inlets and applying underpressure at the outlet.

The whole SADOA-device 0 operates at ambient temperature and ambient pressure. The particle analysing setup 0 can be installed on a single portable rack with following dimension. 1.5 x 1 x 2 m (HxWxD). All instruments 1, 2, 3, 4, 5, 6, 7 can be controlled either manually or in particular automatically by the electronic control and data analysis unit 7. This includes the possibility to define measurement procedures/routines.

The raw particles R emitted by the particle source 1 are polydisperse and have a more or less broad distribution of particle sizes. With the DMA 2, particles R' with a single size are selected from the initial distribution (polydisperse) of raw particles R. With the CPMA 60 and CPC 61, the particle mass distribution can be measured. By curve fitting the particle mass distribution with a log-normal (or bi-modal log-normal) distribution the mean particle mass, also referred to as single particle mass, can be determined. For one particle diameter the single particle mass is determined for freely chosen ozone M concentrations.

The minimal data set consist of the two set points, no ozone and very high ozone concentrations e.g. 10.000 ppb. The increase in particle mass as function of the concentration of reactive gas is the data from which the particle surface area is determined.

For the determination of the single raw particle mass without reactive gas uptake or adsorption, in particular without ozone adsorption, the raw particles can be guided through tubing that build the bypass 9, to bypass the ozonation step or are fed through the adsorption unit 5 timely before or after reactive gas is fed.

On the left-hand side of figure 2, the size selection is indicated from a polydisperse raw particle flow, while on the right-hand side, the masses of ozone adsorbed particles are shown.

A comparison of at least the masses of raw particles of a raw particle gas-flow R and the adsorbed particle gas-flow A is carried out, in order to afterwards determine the surface areas of the raw gas particles R from the measured masses and estimated particle diameters.

The range of raw particles that were measured are given by the instrumentation attached. The DMA 2 limits the particle diameter range to 2 - 1000 nm, while the CPMA 60 limits the particle mass range to 0.02 - 1000 fg. The particle number concentration should be high enough that at least 10 particles/cm³ are left after the size selection step. There is no upper limit in the concentration.

The particle source 1 respectively optional particle size selection unit 2 should give a raw particle output, stable in composition and concentration for the duration of one full scan, about 3 to 15 minutes. The mass determination time is less than 15 minutes.

The method for determining the particle surface area of raw particles in aerosolized state R, for amounts of such raw particles with sample masses of a few nanograms to a few micrograms in aerosolized state, called "SADOA concept" was developed by investigating the reaction of ozone (O₃) with soot particles. It was observed that the reaction is initiated by the adsorption of O₃ molecules on the particle surface.

This Adsorption step can be directly measured by an increase in the single particle mass of the raw particles with a centrifugal particle mass analyzer 60/CPMA and is the core of the SADOA concept. This adsorption step occurs on a timescale of several minutes and therefore can be easily distinguished from a chemical modification of the adsorbed particle AP itself since this is much slower reaction step (> several hours).

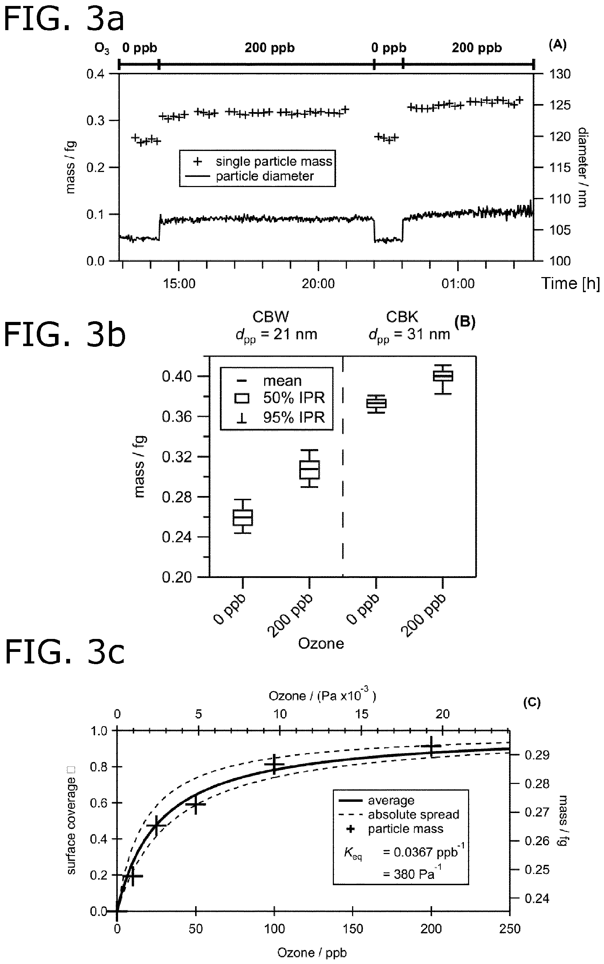

Fig. 3A shows the mass (crosses) and diameter (line) of a CAST brown (CBW) soot particle R with initially 100 nm diameter evolves over time due to exposure to 200 ppb O₃ as reactive gas M. The mass is correlated with the exposition of ozone.

In Fig. 3B the mass increase of CBW soot R is compared to CAST black (CBK) another raw particle R', a soot type with a different composition. As can be seen the absolute mass increase for CBW particles is larger (Δm = 0.05 fg) than for CBK soot particles (Δm = 0.03 fg).

The lower mass increase due to O₃ adsorption of the CBK particles is due to the larger primary particle diameter (*d*_{PP}) and therefore lower single particle surface area (SA).

The adsorption of reactive gases as O₃ on particle surfaces can be generally described by a Langmuir-sorption isotherm. This which describes what fraction of the surface (surface coverage; *θ*) is covered with reactive gas respectively ozone molecules. The increase in *θ* due to an increase of the O₃ concentration is shown for CBW in Fig. 3C. The change in the single particle mass (crosses) aligns with the change in the *θ*, proving that a mass measurement is a suitable way to characterize the adsorption of O₃. Vice versa, the measurement of the increase in the single particle mass can be used to estimate the amount of adsorbed O₃ and to determine the Langmuir-sorption isotherm.

Based on the knowledge of *θ* = 0.88 at 200 ppb O₃, the SA of the single particle can be calculated taking the cross section and the molecular mass of an O₃-molecule into account.

The SA of a single 100 nm raw particle is 1.22×10⁻¹³ m² for CBW and 0.67×10⁻¹³ m² for CBK particle presuming same *θ* at 200 ppb O₃. These values account for a specific SA of 488 m²g⁻¹ and 180 m²g⁻¹ for CBW and CBK, respectively, contrasting the recently published BET values from Mahrt et al.(Mahrt et al., 2018) on polydisperse samples of the same soot reporting 125 m²g⁻¹ for CBW and 120 m²g⁻¹ for CBK and a primary particle diameter (*d*ₚₚ) of 21 nm for CBW and 31 nm for CBK. Following the different *d*ₚₚ, CBW is expected to have a BET-surface 50 % larger than of CBK since the SA scales with *d*ₚₚ⁻¹.

Furthermore, FW200 an industrial carbon black comparable to CBW in *d*ₚₚ and fractal dimension is presented to have a specific SA of 526 m²g⁻¹ (Mahrt et al., 2018) which is very close to the O₃-derived specific SA.

Since CBW is characterized by a rather high content of organic carbon the preconditioning involving heating and drying of the sample at vacuum conditions for 15 h can cause a significant loss of semi-volatile substances form the surface of the particles. BET requires minimum sample mass which can only be acquired in a reasonable time by collection of polydisperse soot. Since BET is mass based and does not scale with particle size, care should be taken when results obtained from size selected measurements are related to polydisperse BET values.

The disclosed method for determining the particle surface area of raw particles in aerosolized state R, for amounts of such raw particles with sample masses of a few nanograms to a few micrograms in aerosolized state, in a particle analyzing setup 0, can be divided into following consecutive steps:
- feeding raw particles form particle source
- optional size selection
- exposure to reactive gas (for example O₃)
- measurement of particle mass
- data analysis

### LIST OF REFERENCE NUMERALS

0 particle analyzing setup/SADOA device
1 Particle source/ particle input flow regulation system
2 optional particle size selection unit (DMA,Differential mobility analyzer)
3 Reactive gas source (M,O₃ generator, reservoir, ...)
4 optional reactive gas flow regulator
5 adsorption unit
   50 adsorption chamber/ CSTR-cascade
   51 optional monitoring device (T, humidity, gassensor) 6 particle mass measurement unit
   60 mass analyzer (Centrifugal Particle Mass Analyzer (CPMA)
   61 particle counter (Condensation particle counter (CPC))
7 Electronic control and data analysis unit.
8 exhaust
R raw particle gas-flow
*d*_{PP} primary particle diameter
SA single particle surface area
A adsorbed particle gas-flow
M reactive gas

## Claims

1. Method for determining the particle surface area (SA) of raw particles with particle sizes below 50 microns, in a particle analyzing setup (0), while the raw particles are in aerosolized state (R)
**characterized in the following steps:**
leading in the raw particle gas-flow (R) comprising the raw particles into a particle mass measurement unit (6)
and
exposing the raw particle gas-flow (R) to a gas flow of reactive gas (M) with a known amount of a reactive gas (M) from a reactive gas source (3) in a gaseous state in an adsorption unit (5) before
further transport of the resulting adsorbed particle gas-flow (A), comprising aerosol raw particles with adsorbed reactive gas molecules (M) into the particle mass measurement unit (6),
wherein masses from the raw particles and the adsorbed particles are determined in the particle mass measurement unit (6), comprising at least a mass analyzer (60), before subsequently
the surface areas (SA) of the raw particles can be determined by comparison of masses of raw particles of the raw particle gas-flow (R) and masses of adsorbed particles of the adsorbed particle gas-flow (A),
controlled by an electronic control and data analysis unit (7), wherein the gas-flows (R, A) are let out through an exhaust (8) of the particle analyzing setup (0) after data collection.

2. Method according to claim 1, wherein raw particles with certain raw particle sizes are selected from the raw particle source (1) with a particle size selection unit (2), before exposition of an amount of pre-selected aerosol raw particles in the aerosolized state to a defined amount of a reactive gas in a gaseous state.

3. Method according to one of preceding claims, wherein the comparison measurement of raw particle gas-flow (R) without exposition to reactive gas molecules and without adsorption step is carried out timely before the measurement with adsorption step in the same analysing setup (0), automatically controlled with the electronic control and data analysis unit (7).

4. Method according to one of claims 1 or 2, wherein the masses of single raw particles without reactive gas uptake or adsorption is carried out via a bypass (9) placed between reactive gas source (3) respectively an optional reactive gas flow regulator (4) and the particle mass measurement unit (6).

5. Method according to one of preceding claims, wherein
the raw particles are:
residues of combustion e.g. soot,
oxidic materials e.g. mineral dust, metal oxides ceramic material e.g Kaolin, tungsten carbide,
salts (NaCl, CaCl₂, CuSO₄, MgCO₃, ...),
biogenic particles e.g. pollen, natural polymers, synthetic polymers,
while the reactive gas (M) is:
ozone, water vapour, hexafluoride, in particular sulfur hexafluoride, hydrocarbons with the general formula CxHy, ammonia (NH₃), hydrogen chloride (HCl) and/or Carbon dioxide (CO₂).

6. Method according to one of preceding claims, wherein the reactive gas (M) is generated by a reactive gas generator forming the reactive gas source (3).

7. Method according to one of preceding claims, wherein analysing particle masses is carried out in the particle mass measurement unit (6) by centrifugal particle mass analyser (60) and a condensational particle counter (61).

8. Method according to one of preceding claims, wherein the method is carried out at low particle number concentration below 1000 particle/cm³ and/or at ambient temperatures below 40°C and/or nearly on-time.

9. Particle analysing setup (0) for determining the particle surface area of raw particles with particle sizes below 50 microns in aerosolized state (R) from a particle source (1), with single particle masses below 100 nanogram in aerosolized state,
**characterized in that**
the particle analysing setup (0) is comprising a reactive gas source (3) from which raw particles are fed into an adsorption unit (5), comprising at least one adsorption chamber (50), in which reactive gas (M) molecules are adsorbed to the raw particles in the raw particle gas-flow (R),
and an interconnected particle mass measurement unit (6), with a mass analyser (60) and a particle counter (61) for automated or manually initiated measurement of raw particles and adsorbed particle numbers and masses and subsequent determination of the particle surface area of raw particles in aerosolized state (R) by an electronic control and data analysis unit (7), forming part of the particle analyzing setup (0).

10. Particle analysing setup (0) according to claim 9, wherein a reactive gas flow regulator (4) is connected between the reactive gas source (3) and the adsorption unit (5).

11. Particle analysing setup (0) according to one of the claims 9 to 10, wherein at least one monitoring device (51) is connected to the adsorption unit (5) and/or the particle source (1) and/or the reactive gas source (3), in particular monitoring Temperature and/or humidity.

12. Particle analysing setup (0) according to one of the claims 9 to 11, wherein a particle size selection unit (2) is connected between the particle source (1) and the reactive gas source (3).

13. Particle analysing setup (0) according to one of the claims 9 to 12, wherein the particle mass measurement unit (6) is formed by a centrifugal particle mass analyser (60) and a condensational particle counter (61).

14. Particle analysing setup (0) according to one of the claims 9 to 13, wherein a bypass (9) is placed between reactive gas source (3) respectively an optional reactive gas flow regulator (4) and the particle mass measurement unit (6), for comparison mass measurements of single raw particles without reactive gas uptake or adsorption.

15. Use of adsorption of reactive gas (M) molecules at raw particles with particle sizes below 50 microns, in aerosolized state in a raw particle gas-flow (R) for determining the particle surface area of the raw particles,
**characterized in that**
after feeding reactive gas (M) molecules to the raw particle gas-flow (R)
the reactive gas (M) molecules are adsorbed at the raw particles forming an adsorbed particle gas-flow (A), leading to a mass increase of the aerosol raw particles with adsorbed reactive gas molecules (M),
which is subsequently manually or automatically analyzed in a particle mass measurement unit (6), comprising a mass analyzer (60) and a particle counter (61), where a comparison of values of raw particles of a raw particle gas-flow (R) and the adsorbed particle gas-flow (A) is carried out
in order to calculate the surface areas of the raw particles from the measured masses and particle numbers.
